# EUROPÄISCHE PATENTSCHRIFT

(11) **EP 4 566 443 B1**
(45) Veröffentlichungstag und Bekanntmachung des Hinweises auf die Patenterteilung: **29.10.2025**
(21) Anmeldenummer: 24199169.4
(22) Anmeldetag: 09.09.2024
(51) Int. Cl.: A01K 1/015

(54) **VORRICHTUNG UND VERFAHREN ZUM AUFBEREITEN VON LIEGEBOXEN FÜR TIERE**
DEVICE AND METHOD FOR PREPARING SLEEPING BOXES FOR ANIMALS
DISPOSITIF ET PROCÉDÉ DE PRÉPARATION DE BOX POUR ANIMAUX

(30) Priorität: 06.12.2023 AT 509812023
(43) Veröffentlichungstag der Anmeldung: 11.06.2025
(73) Patentinhaber: Grojer, Friedrich, 9374 Wieting (AT); Pirolt, Stefan, 9374 Wieting (AT)
(72) Erfinder: Grojer, Friedrich, 9374 Wieting (AT); Pirolt, Stefan, 9374 Wieting (AT)
(74) Vertreter: Wirnsberger & Lerchbaum Patentanwälte OG

(56) Entgegenhaltungen:
- EP-A1- 2 220 931
- CN-U- 215 194 084
- DE-A1- 102012 105 155
- DE-U1- 202007 007 033
- ES-B2- 2 472 091
- FR-A1- 3 081 087
- US-B1- 6 951 253
- US-B1- 8 561 324

## Beschreibung

Die Erfindung betrifft eine Vorrichtung zum Aufbereiten von Liegeboxen für Tiere, insbesondere Rinder, aufweisend einen Grundkörper und eine Aufbereitungseinheit, die dazu eingerichtet ist, einen Bodenbelag der Liegeboxen einzuebnen, wobei die Aufbereitungseinheit mit dem Grundkörper verbunden ist und die Aufbereitungseinheit von einer Ruheposition in eine etwa waagrechte Arbeitsposition schwenkbar ist, um eine Einebnung des Bodenbelages bei insbesondere kontinuierlicher Bewegung der Vorrichtung entlang der Liegeboxen vorzunehmen.

Des Weiteren betrifft die Erfindung ein Verfahren zum Aufbereiten von Liegeboxen für Tiere, insbesondere Rinder, mit einer Vorrichtung der vorstehend genannten Art, wobei mit einer Aufbereitungseinheit ein Bodenbelag der Liegeboxen eingeebnet wird, wobei die Aufbereitungseinheit von einer Ruheposition in eine etwa waagrechte Arbeitsposition geschwenkt wird, um eine Einebnung des Bodenbelages bei insbesondere kontinuierlicher Bewegung der Vorrichtung entlang der Liegeboxen vorzunehmen.

In Ställen für Rinder, insbesondere Milchkühe, sind Liegeboxen für die Tiere vorgesehen. Mit derartigen Liegeboxen wird es ermöglicht, dass beispielsweise Milchkühe während eines Tages viel Zeit im Liegen verbringen können, was eine Ausbeute an Milch erhöht.

Die vorgesehenen Liegeboxen sind in der Regel entlang einer Geraden angeordnet und voneinander durch metallische Liegeboxbügel getrennt. Diese Liegeboxbügel können beispielsweise mit einem breiteren rückseitigen Ende, an welchem die Liegeboxbügel befestigt sind, und einem etwas schmäleren vorderseitigen Ende, das im Bereich des Zugangs zur Liegebox liegt, ausgebildet sein. Die beiden Enden eines Liegeboxbügels sind miteinander verbunden, wobei noch Querstreben vorgesehen sein können, damit die Liegeboxen ausreichend voneinander abgetrennt sind. Die trennenden Liegeboxbügel sind üblicherweise so angeordnet, dass ein Spalt zu einem Bodenbelag verbleibt, welcher in der jeweiligen Liegebox gegeben ist. Der Bodenbelag umfasst üblicherweise Stroh. Des Weiteren kann auch Mist sowie Zuschlagsstoffe, insbesondere desinfizierende Materialien wie Kalk, im Bodenbelag vorliegen.

Da die auf dem Bodenbelag liegenden Tiere ein erhebliches Gewicht aufweisen und sich bewegen, wird das Stroh des Bodenbelages im Laufe der Zeit nicht nur ungleichmäßig verteilt, sondern auch verdichtet, zumal die Tiere auch Kot und Harn abgeben. Es ist daher erforderlich, den Bodenbelag regelmäßig aufzubereiten. Händisch kann dies mit einer Mistgabel und durch Einstreuen von neuem Stroh erfolgen.

Die bloß händische Aufbereitung von Bodenbelägen von Liegeboxen ist sehr aufwändig. Man hat daher versucht, Vorrichtungen zur Pflege von Liegeboxen in einem Stall zu entwickeln, welche einen höheren Automatisierungsgrad mit sich bringen. In der EP 2 220 931 A1 ist hierfür eine Vorrichtung bekannt geworden, welche sowohl ein Einebnungselement zum Einebnen des Bodenbelages als auch eine Zuführeinrichtung zur gleichzeitigen Zuführung von Stroh umfasst. Wenngleich diese Vorrichtung es erlaubt, einen Bodenbelag einer Anordnung von Liegeboxen aufzubereiten, wenn die Vorrichtung entlang der Liegeboxen bewegt wird, ist ein Pflege von Liegeboxen mit einer derartigen Vorrichtung noch immer sehr aufwändig. Die Einebnungseinrichtung muss nämlich ein- und ausgefahren werden. Dadurch ist es erforderlich, dass die Vorrichtung jeweils zu einer Liegebox bewegt wird, wonach erst das Ein- und spätere Ausfahren der Einebnungseinrichtung erfolgen kann. Deswegen ist der gesamte Prozess einschließlich des Einebnens und Einstreuens nicht nur mit vielen Arbeitsschritten verbunden, sondern auch sehr zeitaufwändig. Dies ergibt sich insbesondere dadurch, dass jede Liegebox letztlich gesondert aufbereitet werden muss.

Um die Nachteile der EP 2 220 931 A1 möglichst zu beseitigen, ist es aus der DE 10 2012 105 155 A1 bekannt geworden, das Einebnen eines Bodenbelages von Liegeboxen mit einer hydraulisch angetriebenen Schneckenwelle durchzuführen, die von einer etwa senkrechten Ruheposition in eine etwa waagrechte bzw. horizontale Arbeitsposition schwenkbar ist, wobei die Vorrichtung mit der angetriebenen Schneckenwelle entlang einer Anordnung von Liegeboxen verfahren wird, wobei die Schneckenwelle unterhalb der Liegeboxenbügel geführt wird. Dadurch kann bei Montage der Vorrichtung an einem Hoflader eine kontinuierliche Aufbereitung des Bodenbelages mit der Schneckenwelle erfolgen. Es ist nicht mehr notwendig, einzelne Liegeboxen gesondert aufzubereiten. Wenngleich dies ein Vorteil gegenüber einer Vorrichtung aus der EP 2 220 931 A1 ist, so ist doch nachteilig, dass mit dieser Vorrichtung kein Einstreuen von Stroh möglich ist.

Hier setzt die Erfindung an. Die Erfindung ist im beigefügten Anspruchssatz beschrieben. Aufgabe der Erfindung ist es, eine Vorrichtung der eingangs genannten Art anzugeben, die einfach ausgebildet ist und auf effiziente Weise sowohl eine Einebnung als auch ein Einstreuen mit Stroh oder anderen Materialien ermöglicht.

Des Weiteren ist es ein Ziel der Erfindung, ein Verfahren der eingangs genannten Art derart weiterzubilden, dass eine Aufbereitung eines Bodenbelages einer Anordnung von Liegeboxen einschließlich eines Einstreuens von Stroh oder dergleichen besonders effizient erfolgen kann.

Die Aufgabe der Erfindung wird gelöst, wenn bei einer Vorrichtung der eingangs genannten Art am Grundkörper eine Streueinheit zum Einstreuen von Einstreumaterial wie Stroh und/oder Zuschlagsstoffen in die Liegeboxen angeordnet ist und die Aufbereitungseinheit wechselweise mit der Streueinheit aktivierbar ist.

Mit einer erfindungsgemäßen Vorrichtung wird der Vorteil erzielt, dass mit einer einzelnen Vorrichtung sowohl das Einebnen eines Bodenbelages einer Anordnung von Liegeboxen, die sich insbesondere entlang einer Geraden befinden und durch Liegeboxbügeln getrennt sind, als auch ein nachfolgendes Einstreuen erfolgen können. Dies wird dadurch ermöglicht, dass die Streueinheit, welche auf den Bodenbelag einstreut, in einer Ruhestellung sein kann, wenn die Aufbereitungseinheit aktiviert ist. Dies ermöglicht es, zunächst mit der Aufbereitungseinheit die Liegeboxen kontinuierlich abzufahren, wobei die Aufbereitungseinheit unter den Liegeboxbügeln geführt wird und den Bodenbelag einebnet und auflockert. Nach mehreren Durchläufen durch die Liegeboxen kann umgeschaltet werden, sodass die Aufbereitungseinheit in deren Ruheposition bewegt und die Streueinheit aktiviert wird. Somit kann ein Einstreuen in die Liegeboxen erfolgen. Anders ausgedrückt kann mit der wechselweisen Aktivierung der Aufbereitungseinheit einerseits und der Streueinheit andererseits nicht nur eine Durchführung mehrerer Arbeitsschritte mit einer einzelnen Vorrichtung erfolgen, sondern kann auch jede verfahrene Wegstrecke optimal genutzt werden, wenn entweder die Aufbereitungseinheit oder andernfalls die Streueinheit aktiv ist. Damit ist der gesamte Aufbereitungs- und Einstreuprozess auch sehr zeiteffizient.

Üblicherweise müssen die Liegeboxen mehrmals mit der Aufbereitungseinheit abgefahren werden, bis eine ausreichende Einebnung des Bodenbelages gegeben ist und ehe ein Einstreuen erfolgen kann. Die Streueinheit befindet sich bei in der Arbeitsposition befindlicher Aufbereitungseinheit in deren Ruhestellung. Umgekehrt befindet sich die Aufbereitungseinheit bei arbeitender Streueinheit in der Ruheposition. Es kann somit entweder die Aufbereitungseinheit oder die Streueinheit während der Aufbereitung aktiv sein. Grundsätzlich wäre es auch denkbar, dass die Aufbereitungseinheit und die Streueinheit bei der Aufbereitung gleichzeitig aktiv sind, da aber die Liegeboxen zunächst mehrmals mit der Aufbereitungseinheit abzufahren sind, bewährt sich die erfindungsgemäß vorgesehene wechselweise Aktivierbarkeit.

Die Aufbereitungseinheit umfasst in vorteilhafter Weise einen Rechen zur Einebnung des Bodenbelages oder besteht aus diesem. Dabei bringt der Rechen vor allem Vorteile in Bezug auf eine möglichst einfache Ausbildung der Vorrichtung. Der Rechen ist in der Arbeitsstellung als passives Teil ausgebildet, wird also abgesehen von der Vorwärtsbewegung entlang der Liegeboxen durch die Vorrichtung selbst nicht angetrieben. Dadurch entfallen aufwändige Komponenten für einen Antrieb der Aufbereitungseinheit, wie dies beispielsweise bei einer Schneckenwelle der Fall wäre. Der Rechen kann um eine Schwenkachse schwenkbar gelagert sein, insbesondere in einem Winkel von etwa 90°. Der Rechen steht dann in der Ruheposition etwa senkrecht. Für die Arbeitsposition wird der Rechen um die Schwenkachse geschwenkt. Der entsprechende Schwenkwinkel beträgt vorzugsweise etwa 90°. Somit wird der Rechen bzw. die Antriebseinheit allgemein etwa von einer vertikalen Ruheposition in eine etwa waagrechte Arbeitsposition geschwenkt. Die Schwenkbarkeit der Aufbereitungseinheit und insbesondere des Rechens wird durch Anschläge vorgegeben, zwischen welchen die Aufbereitungseinheit geschwenkt werden kann.

Die Aufbereitungseinheit kann ganz oder teilweise, bevorzugt zumindest überwiegend, mit einer Schrägstellung zu einer Schwenkebene verlaufen, die quer zur Schwenkachse verläuft. Die Schwenkebene verläuft auch quer zur Fahrtrichtung, mit welcher die Vorrichtung im Einsatz verfahren wird. Bevorzugt beträgt ein Winkel zwischen der Aufbereitungseinheit und der Schwenkebene 10° bis 30°, beispielsweise 15° bis 25°. Insbesondere kann ein Eingriffsbereich der Aufbereitungseinheit, mit welchem der Bodenbelag eingeebnet und aufgelockert wird, ganz oder zumindest überwiegend oder auch im Wesentlichen eine derartige Schrägstellung aufweisen. Beispielsweise kann der Eingriffsbereich der Aufbereitungseinheit schräg verlaufend ausgebildet sein, wohingegen ein Befestigungsbereich der Aufbereitungseinheit vertikal verlaufend ausgebildet sein kann. Der Eingriffsbereich schließt dabei bevorzugt unmittelbar an den Befestigungsbereich an. Im Befestigungsbereich kann die Lagerung an der Schwenkachse vorgesehen sein. Durch die Schrägstellung kann der Bodenbelag auch dann gut eingeebnet werden, wenn Höhenunterschiede vorliegen. Solche Höhenunterschiede treten insbesondere dann auf, wenn durch Tiere Material des Bodenbelages in oder aus einer Liegebox vertragen wird, was vor allem am Zu- und Ausgang der Liegebox der Fall ist. Die Liegebox weist dann beispielsweise am Zu- und Ausgang einen niedrigeren Füllstand als an deren rückseitigen Ende auf. Durch die Schrägstellung kann dies praktikabel ausgeglichen werden, wenn die Vorrichtung insgesamt beim und/oder vor dem Bewegen zusätzlich mit dem Fahrzeug etwas geschwenkt wird. Ein derartiges Schwenken der Vorrichtung ist bei üblichen Hofladern nur in Fahrtrichtung möglich; durch die Schrägstellung führt ein solches Schwenken dazu, dass die schräg verlaufende Aufbereitungseinheit unterschiedlich schräg am Bodenbelag angestellt wird.

Wenn die Aufbereitungseinheit als Rechen ausgebildet ist, kann eine besonders einfache Ausbildung erfolgen, weil der Rechen als Rohr mit Stiften ausgebildet sein kann. Das Rohr kann im Querschnitt quer zu dessen Längsachse beispielsweise einen quadratischen oder rechteckigen Querschnitt aufweisen. An Seitenflächen des Rohres sind dann die Stifte angeordnet, beispielsweise durch Aufschweißen, wenngleich die Stifte auch durch eine lösbare Befestigung, beispielsweise mit Schrauben, am Rohr angebracht sein können. Das Rohr und die Stifte sind dabei üblicherweise aus einem Stahl gebildet. Dabei kann das Rohr, welches eine Längserstreckung aufweist, wobei die Stifte entlang der Längserstreckung angeordnet sind, mit Stiften beidseitig längserstreckter, gegenüberliegender Seiten des Rohres besetzt sein. Dabei sind die Stifte auf Lücke angeordnet, sodass die auf einer Seite befindlichen Stifte zwischen den Stiften der anderen Seite liegen, wenn das Rohr in Arbeitsposition ist und in einer Arbeitsebene betrachtet wird. Die Stifte stehen vom Rohr in die gleiche Richtung ab, damit diese in den Bodenbelag eingreifen können. In der Arbeitsposition der Aufbereitungseinheit ragen die Stifte somit nach unten. Entsprechend der bevorzugten etwa waagrechten Anordnung der Aufbereitungseinheit und des eingreifenden Rechens in der Arbeitsposition, sind die Stifte in der Arbeitsposition der Aufbereitungseinheit senkrecht oder ungefähr senkrecht ausgerichtet. Durch die versetzte Anordnung der Stifte wird eine gleichmäßig gute Aufbereitung eines Bodenbelages erreicht.

Es kann vorgesehen sein, dass an einem Teil der Vorrichtung, insbesondere an einem Aufnahmerahmen der Vorrichtung, eine Feder angeordnet ist, die mit der Aufbereitungseinheit verbunden ist. Die Feder kann dazu beitragen, die Aufbereitungseinheit in der Ruheposition zu halten, aber auch leichter wieder von der Arbeitsposition anzuheben. Darüber hinaus dient die Feder auch dazu, bei einem Schwenken der Aufbereitungseinheit von der Ruheposition in die Arbeitsposition eine Dämpfung zu bewirken, sodass die Aufbereitungseinheit, die relativ schwer ausgebildet sein kann, nicht zu rasch nach unten klappt und damit für Erschütterungen sorgt.

Besonders bevorzugt ist es, dass die Vorrichtung eine Kolben-Zylinder-Einheit umfasst, mit welcher die Aufbereitungseinheit von der Ruheposition in die Arbeitsposition bringbar ist. Mit der Kolben-Zylinder-Einheit kann die Aufbereitungseinheit auch wieder zurück von der Arbeitsposition in die Ruheposition bewegt werden. Wenn eine Feder vorgesehen ist, wird die Zurückbewegung durch die Feder unterstützt, sodass ein geringerer Druck eines hydraulischen Mediums, in der Regel ein Öl, erforderlich ist.

Die vorgesehene Streueinheit kann einen Trichter und eine Streuscheibe umfassen. Über den Trichter wird das einzustreuende Material, insbesondere Stroh, zur Verfügung gestellt. Die Streuscheibe, welche mit einem hydraulischen Motor angetrieben sein kann, bringt dieses Material dann über geeignete Austrittsöffnungen vorzugsweise etwa waagrecht aus. Die Austrittsöffnungen im Bereich der Streuscheibe sind so positioniert, dass das ausgebrachte Material etwa waagrecht ausgeworfen wird und auf dem aufbereiteten Bodenbelag zu liegen kommt. Dabei kann um die Streuscheibe herum ein Schutz mit einer Öffnung angebracht sein, wobei das einzustreuende Material über die Öffnung ausgegeben wird. Auf der Streuscheibe können flügelartige Mitnehmer positioniert sein, mit welchen das einzustreuende Material mitgenommen und über die Öffnung ausgeschleudert werden kann.

Es ist weiter günstig, wenn ein hydraulischer Antrieb, insbesondere ein hydraulischer Motor, vorgesehen ist, welcher mit der Streueinheit verbunden ist. Der hydraulische Antrieb ist dazu eingerichtet, die Streuscheibe in eine Rotationsbewegung zu versetzen.

Mit besonderem Vorteil ist vorgesehen, wenn die Streueinheit und die Aufbereitungseinheit hydraulisch in Verbindung stehen und wechselweise hydraulisch aktivierbar sind. Hierfür kann ein hydraulischer Kreislauf vorgesehen sein, insbesondere ein doppeltwirkender Steuerkreis. Bei Beaufschlagung des Steuerkreises mit einem hydraulischen Medium, in der Regel ein Öl, in eine erste Richtung wird die Aufbereitungseinheit von der Ruheposition in die Arbeitsposition geschwenkt, wohingegen die Streueinheit inaktiv bleibt. Bei Beaufschlagung mit dem hydraulischen Medium in die Gegenrichtung wird die Aufbereitungseinheit in die Ruheposition zurückgeschwenkt, wobei, wenn vorgesehen, eine Feder durch die wirkende Federkraft mithilft, um die Ruheposition zu erreichen, ohne dass dabei die Streueinheit aktiviert wird. Wird der Druck weiter gesteigert und ist der Druck des hydraulischen Mediums schließlich groß genug, wird die Streueinheit aktiviert. Wird der Druck später verringert, wird die Streueinheit inaktiv gestellt. Die erforderlichen Öldrücke für die Aktivierung der Aufbereitungseinheit und der Streueinheit sind im hydraulischen Kreislauf mithilfe der Feder so ausgelegt, dass die gesonderte Aktivierung der Aufbereitungseinheit und der Streueinheit möglich ist. Es kann hierfür im Hydraulikkreislauf auch eine Drossel eingebaut ist, welche insbesondere regelbar sein kann. Hierfür sind zwei Leitungen mit Anschlüssen vorgesehen, sodass ein Ankoppeln an einen Hoflader oder ein anderes Fahrzeug mit Hydraulikanschlüssen erfolgen kann. Es sind somit beim Ankoppeln keine weitere Adaptierungsarbeiten erforderlich. Das hydraulische Medium sucht sich dann in der aktivierten Flussrichtung des Öls jeweils den Weg des geringsten Widerstandes. Diese Schaltung ermöglicht es auf einfache und vorteilhafte Weise, mit lediglich zwei Hydraulikanschlüssen zu arbeiten, wie diese bei Hofladern üblicherweise vorgesehen sind. Möglich ist es auch, dass im hydraulischen Kreislauf insbesondere schaltbare Ventile vorgesehen sind, um den Ölfluss und damit die Aktivierung der Aufbereitungseinheit und/oder der Streueinheit zu steuern, wenngleich dies eine etwas aufwändiger zu realisierende Variante darstellt.

Das weitere Ziel der Erfindung wird erreicht, wenn bei einem Verfahren der eingangs genannten Art die Aufbereitungseinheit wechselweise mit einer Streueinheit aktiviert wird.

Ein solches Verfahren bietet den Vorteil, dass bei Bewegen der Vorrichtung mit einem Hoflader oder dergleichen jede zurückgelegte Wegstrecke entweder für eine Aufbereitung eines Bodenbelages oder ein Einstreuen von Stroh oder anderen Materialien genutzt werden kann. Somit lässt sich eine Aufbereitung und ein Einstreuen in sehr kurzen Zeiten und auf einfache Weise erreichen. Das Verfahren kann insbesondere mit einer erfindungsgemäßen Vorrichtung erfolgen.

Dabei kann insbesondere vorgesehen sein, dass die wechselweise Aktivierung der Aufbereitungseinheit und der Streueinheit mit einer Steuereinheit über einen, insbesondere gemeinsamen, hydraulischen Kreislauf durchgeführt wird. Bei geeigneter Schaltung der Antriebe für die Aufbereitungseinheit einerseits und der Streueinheit andererseits braucht somit lediglich eine Förderrichtung für ein hydraulisches Medium, wie insbesondere ein Öl, umgeschaltet zu werden, um entweder die Aufbereitungseinheit oder die Streueinheit zu aktivieren. Die Steuereinheit kann in einer Fahrerkabine eines Fahrzeuges wie eines Hofladers angeordnet sein.

Um das Verfahren besonders einfach zu führen, kann vorgesehen sein, dass die Aufbereitungseinheit in der Arbeitsposition starr verfahren wird. Dies kann erfolgen, wenn die Aufbereitungseinheit als Rechen oder dergleichen ausgebildet ist. In der Arbeitsposition wird die Aufbereitungseinheit als solche passiv betrieben.

Weitere Merkmale, Vorteile und Wirkungen der Erfindung ergeben sich aus dem nachfolgend dargestellten Ausführungsbeispiel. In den Zeichnungen, auf welche dabei Bezug genommen wird, zeigen:
Fig. 1 eine perspektivische Darstellung einer erfindungsgemäßen Vorrichtung;
Fig. 2 eine erste seitliche Ansicht einer erfindungsgemäßen Vorrichtung;
Fig. 3 eine zweite seitliche Ansicht einer erfindungsgemäßen Vorrichtung;
Fig. 4 eine Draufsicht auf eine erfindungsgemäße Vorrichtung ohne Streueinheit.

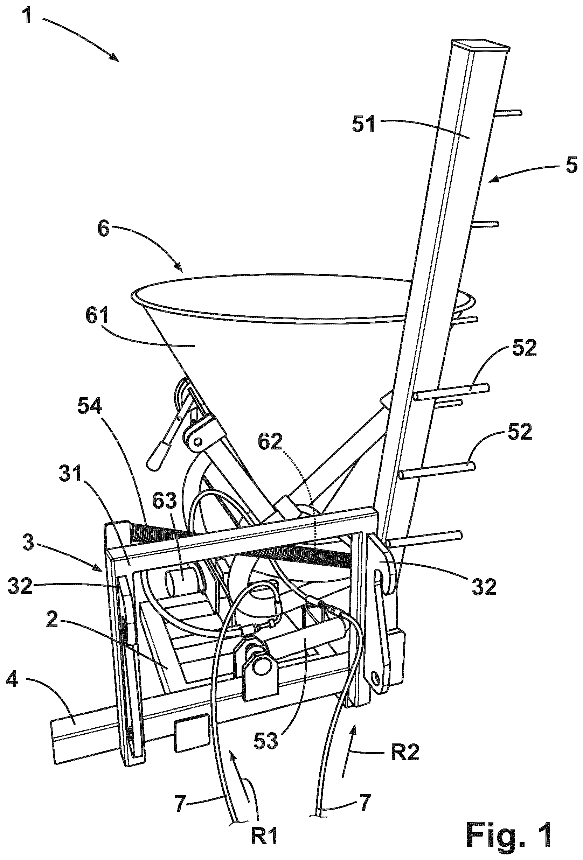

In Fig. 1 ist eine erfindungsgemäße Vorrichtung 1 dargestellt. Die Vorrichtung 1 umfasst einen Grundkörper 2. Der Grundkörper 2 ist dazu eingerichtet, die übrigen Komponenten der Vorrichtung 1 zu tragen und ist mit diesen unmittelbar oder mittelbar in Verbindung.

Am Grundkörper 2 ist eine Aufnahme 3 angeordnet, die einen Aufnahmerahmen 31 sowie Aufnahmeelemente 32 in Form von Haken aufweist. Mit den Aufnahmeelementen 32 kann die gesamte in Fig. 1 dargestellte Vorrichtung an einem Hoflader oder einem anderen Fahrzeug befestigt bzw. eingehängt werden.

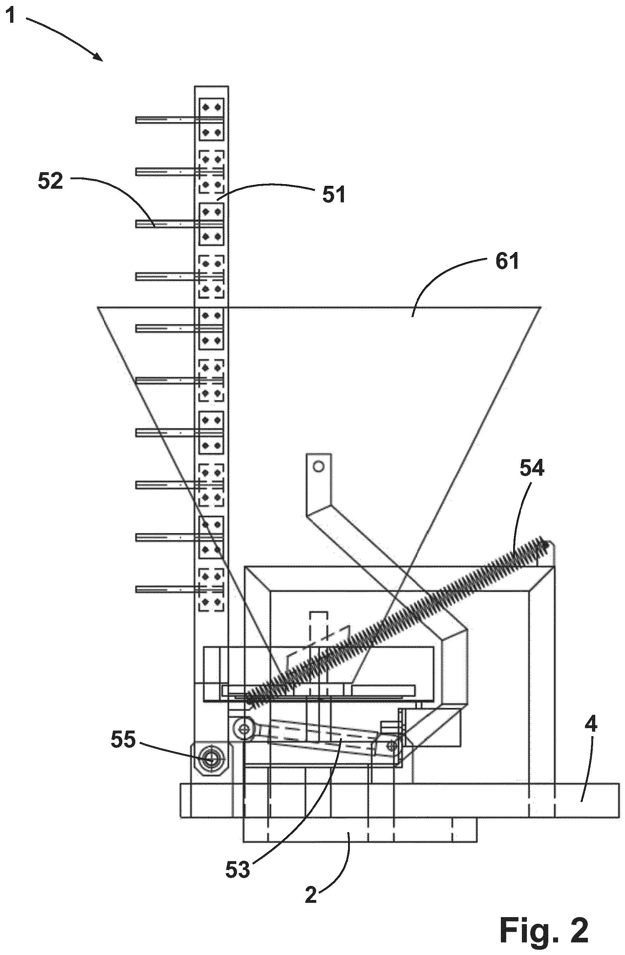

Des Weiteren umfasst die Vorrichtung 1 eine Aufbereitungseinheit 5 und eine Streueinheit 6. Die Aufbereitungseinheit 5 ist als Rechen 51 ausgebildet. An dem Rechen 51 sind eine Vielzahl von Stiften 52 angeordnet, wobei die Stifte 52 in dieselbe Richtung ragen. Die Stifte 52 können wie in Fig. 1 dargestellt wechselweise an zwei Seitenflächen des in einem Querschnitt zu einer Längsachse des etwa rechteckigen Rechens 51 so angeordnet sein, dass jeweils eine Reihe von Stiften 52 über eine halbe Länge des Rechens 51 vorliegt, wobei sich die Reihen über die Länge des Rechens 51 ergänzen. Möglich ist es aber auch, dass deutlich mehr Stifte 52 vorliegen, wobei die Stifte auf einer Seite des Rechens 51 gegenüber den Stiften 52 auf der anderen Seite des Rechens 51 versetzt sind, wie dies in Fig. 2 ersichtlich ist. Mit anderen Worten sind die Stifte 52 dann auf Lücke angeordnet. Der Rechen 51 selbst kann beispielsweise als Formrohr ausgebildet sein. Die Stifte 52 sind dabei am Rechen 51, der üblicherweise ebenso wie die Stifte 52 aus einem Stahl besteht, angeschweißt. Alternativ können die Stifte 52 oder andere Eingriffsmittel auch angeschraubt oder auf andere Art lösbar befestigt sein. Die Schwenkachse 55 ist an einem Querträger 4 gelagert, der mit dem Grundkörper 2 verbunden ist.

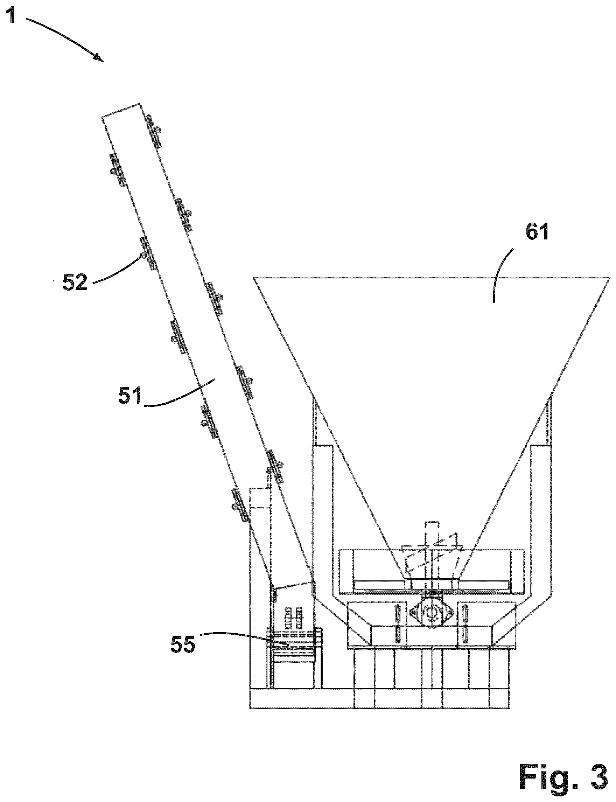

Der Rechen 51 ist an einer in Fig. 2 und Fig. 3 ersichtlichen Schwenkachse 55 gelagert und um diese Schwenkachse 55 in einem Winkel von etwa 90° schwenkbar. In der in Fig. 1 dargestellten Situation befindet sich der Rechen 51 in einer Ruheposition. Um den Rechen 51 in eine Arbeitsposition zu bewegen (in Fig. 1 im Bild Bewegung nach rechts), wird eine hierfür eingerichtete Kolben-Zylinder-Einheit 53 aktiviert. Damit der Rechen 51 nicht aufgrund dessen Masse zu rasch geschwenkt und damit nach unten gekippt wird, ist eine Feder 54 vorgesehen, welche unter anderem ein sanftes Schwenken des Rechens 51 ermöglicht. Die Feder 54 ist an dem Rechen 51 und gegenüberliegend an dem Aufnahmerahmen 31 angeordnet, wobei die Feder 54 wie in Fig. 1 an einer Oberseite des Aufnahmerahmens 31 befestigt sein kann.

Die Streueinheit 6 weist einen Trichter 61 sowie eine in Fig. 1 verdeckte Streuscheibe 62 und einen hydraulischen Antrieb 63 auf.

Fig. 2 und Fig. 3 zeigen die Elemente teilweise in Seitenansichten im Wesentlichen weitgehend gleich ausgebildete Variante der Vorrichtung 1, wobei jedoch mehr Stifte 52 am Rechen 51 vorgesehen sind. In Fig. 2 ist die Schwenkachse 55 ersichtlich, um welche der Rechen 51 durch Aktivierung der Kolben-Zylinder-Einheit von der Ruheposition in die Arbeitsposition bewegt wird. Die Feder 54 wird dabei gespannt.

Aus der Seitenansicht in Fig. 3, welche wiederum einer Ruheposition des Rechens 51 entspricht (Ansicht 90° gedreht zu Fig. 2) ist eine Schrägstellung des Rechens 51 ersichtlich. Die Schrägstellung ist in Bezug auf eine Schwenkebene gegeben, die quer zur Schwenkachse 55 verläuft, und kann etwa einen Winkel von 10° bis 30°, beispielsweise 15° bis 25°, mit einer Vertikalen einschließen. Diese Schrägstellung führt zu einem Spielraum zwischen dem Rechen 51 und dem Trichter 61. Insbesondere dient die Schrägstellung des Rechnens 51 dazu, ungleichmäßige Höhen des Bodenbelages auszugleichen. Dies wird ermöglicht, wenn die Vorrichtung 1 insgesamt mit einem Hoflader in Fahrtrichtung leicht angekippt oder nach unten geneigt wird. Die schräge Anstellung der Aufbereitungseinheit 5 oder zumindest eines in den Bodenbelag eingreifenden Teils derselben führt dann zu einem Eingriff in den Bodenbelag mit geänderter Neigung, wodurch unterschiedliche Höhen im Bodenbelag ausgeglichen werden können.

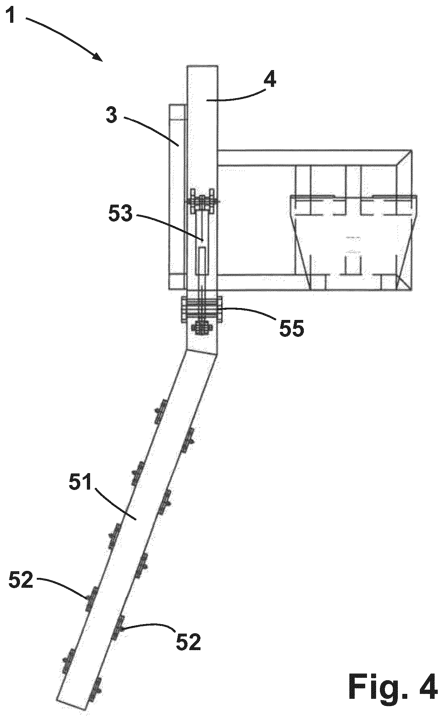

In Fig. 4 ist die Vorrichtung aus Fig. 2 sowie Fig. 3 nochmals, allerdings ohne die Streueinheit 6 gezeigt. In Fig. 4 liegt eine Draufsicht vor, in welcher der Rechen 51 ausgeklappt ist. Eine Förderrichtung für die Vorrichtung 1, beispielsweise bei Montage auf einem Hoflader, verläuft dabei entlang der Richtung der Schwenkachse. Ein Betrieb der Vorrichtung 1 bzw. ein Verfahren mit derselben läuft mit Blick auf Fig. 1 wie folgt ab: Die Vorrichtung 1 wird auf einem Hoflader oder einem anderen geeigneten Fahrzeug mit zwei Hydraulikanschlüssen befestigt. Hierfür wird die Vorrichtung 1 mit den Aufnahmeelementen 32 am Fahrzeug eingehängt. Anschließend werden zwei Hydraulikleitungen 7 der Vorrichtung 1 mit einem doppeltwirkenden Steuerkreis des Fahrzeuges verbunden. Der Rechen 51 befindet sich ebenso wie die Streuscheibe 61 in Ruheposition. Anschließend wird die Hydraulikleitung 7 in einer ersten Richtung R1 mit Öl beaufschlagt, sodass die Kolben-Zylinder-Einheit 53 aktiviert wird, um den Rechen 51 auszuklappen. Die Streuscheibe 61 bleibt inaktiv. Es kann nun mit dem Fahrzeug mit der daran befestigten Vorrichtung 1 eine Einebnung und Auflockerung des Bodenbelages von Liegeboxen erfolgen. Hierfür wird das Fahrzeug entlang einer Geraden neben den Liegeboxen verfahren. Dieser Vorgang wird mehrmals wiederholt, bis der Bodenbelag, der zum Beispiel durch Kot der Tiere stark verklumpt sein kann, geeignet gelockert und eingeebnet ist. Danach erfolgt mit einer Steuereinheit ein Umschalten der Förderrichtung und das Öl wird in einer zweiten Richtung R2 gefördert. Dadurch wird zunächst die Kolben-Zylinder-Einheit 53 in deren Gegenrichtung aktiviert, sodass der Rechen 51 angehoben wird, wobei die Feder 54 dieses Anheben begünstigt. Mit Hilfe der Feder 54 kann der Rechen 51 mit relativ niedrigem Öldruck gehoben werden, sodass die Streuscheibe 62 nicht in Drehbewegung versetzt wird. Durch den Fluss des hydraulischen Mediums in die zweite Richtung R2 kann im unmittelbaren Anschluss der hydraulische Antrieb 63 zum Betrieb der Streuscheibe 62 aktiviert werden und die Vorrichtung 1 mit dem Fahrzeug wiederum entlang der Liegeboxen verfahren werden, um Stroh und/oder Zuschlagstoffe einzustreuen. Jede Wegstrecke ist somit mit einem Bearbeitungsvorgang assoziiert, was zu einer hohen Verfahrenseffizienz führt.

## Patentansprüche

1. Vorrichtung (1) zum Aufbereiten von Liegeboxen für Tiere, insbesondere Rinder, aufweisend einen Grundkörper (2) und eine Aufbereitungseinheit (5), die dazu eingerichtet ist, einen Bodenbelag der Liegeboxen einzuebnen, wobei die Aufbereitungseinheit (5) mit dem Grundkörper (2) verbunden ist und die Aufbereitungseinheit (5) von einer Ruheposition in eine etwa waagrechte Arbeitsposition schwenkbar ist, um eine Einebnung des Bodenbelages bei insbesondere kontinuierlicher Bewegung der Vorrichtung (1) entlang der Liegeboxen vorzunehmen, **dadurch gekennzeichnet, dass** am Grundkörper (2) eine Streueinheit (6) zum Einstreuen von Einstreumaterial wie Stroh und/oder Zuschlagsstoffen in die Liegeboxen angeordnet ist und die Aufbereitungseinheit (5) wechselweise mit der Streueinheit (6) aktivierbar ist.

2. Vorrichtung (1) nach Anspruch 1, **dadurch gekennzeichnet, dass** sich die Streueinheit (6) bei in der Arbeitsposition befindlicher Aufbereitungseinheit (5) in einer Ruhestellung befindet.

3. Vorrichtung (1) nach Anspruch 1 oder 2, **dadurch gekennzeichnet, dass** die Aufbereitungseinheit (5) einen Rechen (51) zur Einebnung des Bodenbelages umfasst oder aus diesem besteht.

4. Vorrichtung (1) nach Anspruch 3, **dadurch gekennzeichnet, dass** der Rechen (51) um eine Schwenkachse (55) schwenkbar gelagert ist, insbesondere schwenkbar in einem Winkel von etwa 90°.

5. Vorrichtung (1) nach Anspruch 3 oder 4, **dadurch gekennzeichnet, dass** der Rechen (51) als Rohr mit Stiften (52) ausgebildet ist.

6. Vorrichtung (1) nach einem der Ansprüche 1 bis 5, **dadurch gekennzeichnet, dass** an einem Teil der Vorrichtung (1), insbesondere an einem Aufnahmerahmen (31) der Vorrichtung (1), eine Feder (54) angeordnet ist, die mit der Aufbereitungseinheit (5) verbunden ist.

7. Vorrichtung (1) nach einem der Ansprüche 1 bis 6, **dadurch gekennzeichnet, dass** die Vorrichtung (1) eine Kolben-Zylinder-Einheit (53) umfasst, mit welcher die Aufbereitungseinheit (5) von der Ruheposition in die Arbeitsposition bringbar ist.

8. Vorrichtung (1) nach einem der Ansprüche 1 bis 7, **dadurch gekennzeichnet, dass** die Streueinheit (6) einen Trichter (61) und eine Streuscheibe (62) umfasst.

9. Vorrichtung (1) nach einem der Ansprüche 1 bis 8, **dadurch gekennzeichnet, dass** ein hydraulischer Antrieb (63) vorgesehen ist, der mit der Streueinheit (6) verbunden ist.

10. Vorrichtung (1) nach einem der Ansprüche 1 bis 9, **dadurch gekennzeichnet, dass** die Streueinheit (6) und die Aufbereitungseinheit (5) hydraulisch in Verbindung stehen und wechselweise hydraulisch aktivierbar sind.

11. Verfahren zum Aufbereiten von Liegeboxen für Tiere, insbesondere Rinder, mit einer Vorrichtung (1) nach einem der Ansprüche 1 bis 10, wobei mit einer Aufbereitungseinheit (5) ein Bodenbelag der Liegeboxen eingeebnet wird, wobei die Aufbereitungseinheit (5) von einer Ruheposition in eine etwa waagrechte Arbeitsposition geschwenkt wird, um eine Einebnung des Bodenbelages bei insbesondere kontinuierlicher Bewegung der Vorrichtung (1) entlang der Liegeboxen vorzunehmen, **dadurch gekennzeichnet, dass** die Aufbereitungseinheit (5) wechselweise mit einer Streueinheit (6) aktiviert wird.

12. Verfahren nach Anspruch 11, **dadurch gekennzeichnet, dass** die wechselweise Aktivierung der Aufbereitungseinheit (5) und der Streueinheit (6) mit einer Steuereinheit über einen, insbesondere gemeinsamen, hydraulischen Kreislauf durchgeführt wird.

13. Verfahren nach Anspruch 11 oder 12, **dadurch gekennzeichnet, dass** die Aufbereitungseinheit (5) in der Arbeitsposition starr verfahren wird.

## Claims

1. A device (1) for the preparation of lying boxes for animals, in particular cattle, comprising a base body (2) and a preparation unit (5), which is set up to level out a floor covering of the lying boxes, wherein the preparation unit (5) is connected to the base body (2) and the preparation unit (5) can be swivelled from a rest position into a roughly horizontal working position, in order to perform levelling-out of the floor covering in particular when the device (1) is moving continuously along the lying boxes, **characterised in that** a spreading unit (6) is arranged on the base body (2) for spreading bedding material such as straw and/or aggregates into the lying boxes and the preparation unit (5) can be activated alternately with the spreading unit (6).

2. The device (1) according to claim 1, **characterised in that** the spreading unit (6) is in the rest position when the preparation unit (5) is in the working position.

3. The device (1) according to claim 1 or 2, **characterised in that** the preparation unit (5) comprises a rake (51) for levelling the floor covering or consists thereof.

4. The device (1) according to claim 3, **characterised in that** the rake (51) is mounted swivellable about a swivel axis (55), in particular swivellable in an angle of about 90°.

5. The device (1) according to claim 3 or 4, **characterised in that** the rake (51) is designed as a pipe with pins (52).

6. The device (1) according to any one of claims 1 to 5, **characterised in that** a spring (54), which is connected to the preparation unit (5), is arranged on a part of the device (1), in particular on a mounting frame (31) of the device (1).

7. The device (1) according to any one of claims 1 to 6, **characterised in that** the device (1) comprises a piston-cylinder unit (53), with which the preparation unit (5) can be brought from the rest position into the working position.

8. The device (1) according to any one of claims 1 to 7, **characterised in that** the spreading unit (6) comprises a hopper (61) and a spreading disc (62).

9. The device (1) according to any one of claims 1 to 8, **characterised in that** a hydraulic drive (63) is provided, which is connected to the spreading unit (6).

10. The device (1) according to any one of claims 1 to 9, **characterised in that** the spreading unit (6) and the preparation unit (5) are hydraulically connected and can be hydraulically activated alternately.

11. A method for preparing lying boxes for animals, in particular cattle, with a device (1) according to any one of claims 1 to 10, wherein a floor covering of the lying boxes is levelled with a preparation unit (5), wherein the preparation unit (5) is swivelled from a rest position into a roughly horizontal working position, in order to perform a levelling-out of the floor covering in a particular when the device (1) is moving continuously along the lying box, **characterised in that** the preparation unit (5) is activated alternating with a spreading unit (6).

12. The method according to claim 11, **characterised in that** the alternating activation of the preparation unit (5) and the spreading unit (6) is carried out with a control unit via an, in particular common, hydraulic circuit.

13. The method according to claim 11 or 12, **characterised in that** the preparation unit (5) is displaced rigidly in the working position.

## Revendications

1. Dispositif (1), destiné à préparer des logettes pour des animaux, notamment des bovins, comportant un corps de base (2) et une unité de préparation (5), qui est configurée pour aplanir un revêtement de sol des logettes, l'unité de préparation (5) étant reliée avec le corps de base (2) et l'unité de préparation (5) étant susceptible de pivoter d'une position de repos dans une position de travail approximativement horizontale, pour procéder à un aplanissement du revêtement de sol lors d'un déplacement notamment continu du dispositif (1) le long des logettes, **caractérisé en ce que** sur le corps de base (2) est placée une unité d'épandage (6), destinée à épandre de la litière, telle que de la paille et / ou des granulats dans les logettes et l'unité de préparation (5) est activable alternativement avec l'unité d'épandage (6).

2. Dispositif (1) selon la revendication 1, **caractérisé en ce que** lorsque l'unité de préparation (5) se trouve dans la position de travail, l'unité d'épandage (6) se trouve dans une position de repos.

3. Dispositif (1) selon la revendication 1 ou 2, **caractérisé en ce que** l'unité de préparation (5) comprend un râteau (51), destiné à aplanir le revêtement de sol ou est constituée de celui-ci.

4. Dispositif (1) selon la revendication 3, **caractérisé en ce que** le râteau (51) est logé en étant susceptible de pivoter autour d'un axe de pivotement (55) notamment susceptible de pivoter sous un angle d'approximativement 90°.

5. Dispositif (1) selon la revendication 3 ou 4, **caractérisé en ce que** le râteau (51) est conçu sous la forme d'un tube doté de tiges (52).

6. Dispositif (1) selon l'une quelconque des revendications 1 à 5, **caractérisé en ce que** sur une partie du dispositif (1), notamment sur un cadre d'accueil (31) du dispositif (1) est placé un ressort (54), qui est relié avec l'unité de préparation (5).

7. Dispositif (1) selon l'une quelconque des revendications 1 à 6, **caractérisé en ce que** le dispositif (1) comprend une unité piston-cylindre (53), à l'aide de laquelle, l'unité de préparation (5) est susceptible d'être amenée de la position de repos dans la position de travail.

8. Dispositif (1) selon l'une quelconque des revendications 1 à 7, **caractérisé en ce que** l'unité d'épandage (6) comprend une trémie (61) et un disque diffuseur (62).

9. Dispositif (1) selon l'une quelconque des revendications 1 à 8, **caractérisé en ce qu'**il est prévu un entraînement (63) hydraulique, qui est relié avec l'unité d'épandage (6).

10. Dispositif (1) selon l'une quelconque des revendications 1 à 9, **caractérisé en ce que** l'unité d'épandage (6) et l'unité de préparation (5) sont en liaison hydraulique et sont hydrauliquement activables de manière alternative.

11. Procédé, destiné à préparer des logettes pour des animaux, notamment des bovins, à l'aide d'un dispositif (1) selon l'une quelconque des revendications 1 à 10, à l'aide d'une unité de préparation (5), un revêtement de sol des logettes étant aplani, l'unité de préparation (5) étant pivotée d'une position de repos dans une position de travail approximativement horizontale, pour procéder à un aplanissement du revêtement de sol lors d'un déplacement notamment continu du dispositif (1) le long des logettes, **caractérisé en ce que** l'unité de préparation (5) est activée alternativement avec une unité d'épandage (6).

12. Procédé selon la revendication 11, **caractérisé en ce que** l'activation alternative de l'unité de préparation (5) et de l'unité d'épandage (6) est réalisée à l'aide d'une unité de commande, par l'intermédiaire d'un circuit hydraulique, notamment commun.

13. Procédé selon la revendication 11 ou 12, **caractérisé en ce que** l'unité de préparation (5) est déplacée de manière rigide dans la position de travail.
